# EUROPEAN PATENT APPLICATION

(11) **EP 3 324 037 A2**
(43) Date of publication of application: **23.05.2018**
(21) Application number: 17199385.0
(22) Date of filing: 31.10.2017
(51) Int. Cl.: F03B 13/18

(54) **POWER TAKE-OFF DEVICE**

(30) Priority: 31.10.2016 SE 1651434
(71) Applicant: Ocean Harvesting Technologies AB, 371 75 Karlskrona (SE)
(72) Inventor: SIDENMARK, Mikael, 372 94 LISTERBY (SE)
(74) Representative: Bergenstråhle Group AB

(57) **Abstract**

A power take-off device for use in a wave energy converter comprises a buoy (1) and a means (2, 3) for converting linear motion from movements of the buoy (1) into rotary motion comprising an elongated means (2) and rotary devices (3) interacting with the elongated means, wherein whereby the rotary devices (3) in the power take-off device preferably are flexibly suspended by wire (33) in support structure (30a) fixed with the buoy (1). By providing means (7a) for applying an essentially constant pre-tension force on the buoy (1), connected to a rotary device (3), and means (7b) for applying a variable damping force on the buoy (1), connected to a rotary device (3), wherein the variable damping force is superimposed on the pre-tension force, whereby, during operation, a unidirectional torque is applied on the rotary devices (3) by the combination of the means (7a) and the means (7b), to combine control of the resonance frequency of the buoy as well as control of the damping to extract power, with the purpose to increase the power capture and reduce design complexity. Optionally, means (6) are connected to a rotary device (3) for changing the effective mass of buoy (1) to control the resonance frequency.

## Description

### Technical field

The present invention relates generally to wave energy conversion and more particularly to a power take-off device with improved control function and design to increase power capture and reduce complexity.

### Background art

A wave energy converter can capture significantly more power from the waves at the point where the resonance frequency of the buoy correlates with the wave frequency. When a buoy is resonant with the waves, the amplitude and velocity of the oscillating movement of the buoy is greatly increased. However, the buoy has to have a very large mass to resonate at a frequency that matches with the wave frequency in the average sea state. A wave energy converter with a large mass will also not be resonant in higher or lower wave frequencies, i.e. the natural frequency of a buoy is quite narrow banded in relation to the frequency range in ocean waves.

To capture the most power from a given wave, an optimal damping force has to be applied to the buoy, in addition to the buoy being resonant with the wave. If the damping force is higher or lower than the optimal damping force, power capture is reduced. It is therefore an advantage to provide a power take-off system capable of changing damping force in order to provide the optimal force for a range of different wave sizes.

It has been proposed different control techniques for the force applied to the buoy in a wave energy converter which combine control of the resonance frequency of the buoy as well as control of the damping to extract power, with the purpose to extract as much power as possible from the waves.

Reactive control is well known to provide the optimal force to apply to a buoy in order to extract close to the maximum power from the waves but is not easy to implement a real system due to high cost and high losses in the typical power take-off system. With reactive control, the force applied to the point absorber by the power take-off can be described as the sum of two different components, one corresponding to a damping component of the buoy motion and the other resembling the effect of a combined mass and hydrostatic stiffness variation on the point absorber (reactive component) that controls the resonance frequency of the buoy. The ideal case (optimum control) would be to use the reactive component in the control to cancel the effect of the difference between the effects of the hydrostatic stiffness and the effective mass of the point absorber. The amplitude of the force required to control the resonance frequency in this way is however in the order of a magnitude larger than the damping force component and the reactive part of the force means that power flow is reversed in the power take-off to push the buoy during some instances of the wave cycle. In a direct drive system, the generator has to be greatly oversized to apply the force component that controls the resonance frequency of the buoy which increase the cost of the power take-off system and also reduces the efficiency, and there are further losses associated with round trip through the generator when using electric power to drive it as motor to reverse the flow of energy in the system to apply reactive force to the buoy.

Also, both these force components alter in direction through the wave cycle with the changing direction of the buoy movement. Applying reactive force control through the full wave cycle therefore requires a fixed point of reference against the buoy which can typically be provided with a fixed structure against an oscillating buoy. The power take-off is loaded in the upward motion by the wave lifting the buoy and by a ballast or mass in the buoy in the downward movement of the wave. However, such structure is associated with a high cost.

A more cost effective solution for the structure of a point absorber is to use a single point mooring rope connected to the seabed. Such systems can however only apply phase and damping forces in the up-stroke of the wave, while a smaller force has to be maintained in the same direction in the downward movement of the wave to keep the mooring rope tensed and ready for the next upward movement. The utilization of the power take-off in such uni-directional systems is therefore lower compared to systems with bi-directional control of resonance frequency and power capture, which results in a less economical system due to lower power capture performance.

### Summary of invention

An object of the present invention is to provide a power take-off for wave energy converters wherein the drawbacks of prior art are mitigated and wherein the design and control strategy are improved.

According a first aspect of the invention there is provided a power take-off device comprising a buoy and a means for converting linear motion from movements of the buoy into rotary motion comprising an elongated means and rotary devices interacting with the elongated means, the power take-off device being characterized by means for applying an essentially constant pre-tension force on the buoy, connected to a rotary device, and means for applying a variable damping force on the buoy, connected to a rotary device, wherein the variable damping force is superimposed on the pre-tension force, whereby, during operation, a uni-directional torque is applied on the rotary devices by the combination of the means for applying an essentially constant pre-tension force on the buoy and the means for applying a variable damping force on the buoy.

In a preferred embodiment, the elongated means is a rack and the rotary devices are pinions.

In a preferred embodiment, the means for applying an essentially constant pre-tension force on the buoy are substantially larger, preferably 3-6 times larger than the means for applying a variable damping force on the buoy.

In a preferred embodiment, the uni-directional torque applied on the rotary devices is in a direction that pulls the buoy downward.

In a preferred embodiment, the means for applying an essentially constant pre-tension force on the buoy, and the means for applying a variable damping force on the buoy are hydraulic pumps/motors connected to a rotary device of said rotary devices.

In a preferred embodiment, control valves are adapted to connect and disconnect the hydraulic pumps/motors.

In a preferred embodiment, hydraulic accumulators are connected to the hydraulic pumps/motors and adapted to store and emit energy to drive the hydraulic pumps/motors.

In a preferred embodiment, a flywheel is connected to a rotary device of said rotary devices.

In a preferred embodiment, a transmission means is adapted to engage and disengage the flywheel to and from the rotary device.

In a preferred embodiment, the transmission means comprises a clutch.

In a preferred embodiment, the transmission means comprises a continuous variable transmission.

In a preferred embodiment, a plurality of flywheels are provided.

In a preferred embodiment, at least one flywheel arrangement is provided comprising two flywheels, each flywheel being connected to a common rotary device by means of a respective transmission means.

In a preferred embodiment, least one flywheel arrangement is provided comprising one flywheel connected to a rotary device by means of a transmission means, the flywheel arrangement further comprising a fixed displacement hydraulic pump connected to the rotary device.

In a preferred embodiment, at least one flywheel arrangement is provided comprising one flywheel connected to a rotary device by means of a transmission means, the flywheel arrangement further comprising a variable displacement hydraulic pump connected to the rotary device.

In a preferred embodiment, at least one flywheel arrangement comprises a planetary gearbox adapted to increase the speed of the flywheel.

In a preferred embodiment, an electric generator is connected to a rotary device of said rotary devices.

In a preferred embodiment, the elongated means is held in an essentially fixed vertical position, preferably by means of a mooring rope attached to a foundation on a seabed below the buoy, whereby the rotary devices are rotated by means of the elongated means when the buoy is put in motion by movements of water.

According to a second aspect of the invention, a power conversion device is provided comprising a means for converting linear motion into rotary motion comprising an elongated means and rotary devices interacting with the elongated means, the power conversion device being characterized by a plurality of power conversion modules, each power conversion module comprising a rotary device and at least one of the following connected to the rotary device: a hydraulic pump/motor, an electric generator, and a flywheel, and a bogie arrangement comprising two power conversion modules journaled, wherein the rotary devices preferably are journaled at a right angle to the extension of the elongated means.

In a preferred embodiment, a support structure is provided suspending the bogie arrangement, the support structure comprising a wire running around a plurality of sheaves allowing the bogie arrangement to turn in all directions.

In a preferred embodiment, the wire is attached to a first and a second shackle and runs from a first shackle, essentially vertically down around a first bogie sheave in a first bogie-frame, then essentially horizontally across to the other side of the elongated means, to and around a third bogie sheave in a second bogie-frame, then essentially vertically up and around a support structure sheave suspended in the support structure, then back again down around fourth and first bogie sheaves and in the bogie frames and finally up to the second shackle, which is spaced apart from the first shackle.

In a preferred embodiment, a second wire is provided holding the bogie-frames also from below, preferably through shackles suspended from one side of support structure and through a second support structure sheave.

In a preferred embodiment, the elongated means is provided with guide rails on each side of elongated means and the bogie-frame is provided with corresponding guide wheels on each side of the rotary devices in each power conversion module and engaging the guide rails so that the bogie-frame follows the elongated means when moving up and down, whereby the guide rails fix the distance between the distance between the rotary means and the elongated means.

In a preferred embodiment, a plurality of bogie arrangements is provided.

In a preferred embodiment, the power conversion device is a power take-off device.

In a preferred embodiment, the power conversion device is a gravity storage device.

In a third aspect of the invention, an array of wave energy converters is provided comprising a plurality of power take-off devices according to the invention interconnected by hydraulic hoses or electrical wires.

In a preferred embodiment, a central unit is connected to the plurality of power take-off devices and comprising means for storing energy.

In a preferred embodiment, the central unit comprises a gravity storage device.

In a preferred embodiment, a plurality of lifting devices are provided, each lifting device being associated with a power take-off device of the plurality of power take-off devices in a wave energy converter and adapted to suspend said hydraulic hoses, preferably to respective vertical pipes and knee-junction provided on the sea bed.

In a preferred embodiment, each wave energy converter is electrically interconnected by means of a dynamic electric cable to a lifting device, and a static electric cable held essentially straight in a vertical direction by a lifting device, and with the bottom end of the static electric cable being connected to a horizontal static electric cable on the seabed, preferably through a foundation and a shackle, whereby the horizontal static electric cables from each wave energy converter is conveyed to a central unit.

In a preferred embodiment, the lifting devices are tension buoys.

According to a fourth aspect of the invention, a central unit is provided for connection to an array of wave energy converters, comprising an energy storage means, preferably a gravity storage means.

In a preferred embodiment, the central unit is a power conversion device comprising a plurality of power conversion modules, each power conversion module comprising a rotary device and at least one of the following connected to the rotary device: a hydraulic pump/motor, an electric generator, and a flywheel, and a bogie arrangement comprising two power conversion modules journaled, wherein the rotary devices preferably are journaled at a right angle to the extension of the elongated means, comprising a housing standing on a sea bed.

In a preferred embodiment, the central unit is a power conversion device comprising a plurality of power conversion modules, each power conversion module comprising a rotary device and at least one of the following connected to the rotary device: a hydraulic pump/motor, an electric generator, and a flywheel, and a bogie arrangement comprising two power conversion modules journaled, wherein the rotary devices preferably are journaled at a right angle to the extension of the elongated means, and comprising a housing connected to a foundation standing on a sea bed through a mooring rope, which is kept in tension by a submerged part of the housing providing a lift force higher than the gravity force on the central unit.

In a preferred embodiment, the central unit is a power conversion device comprising a plurality of power conversion modules, each power conversion module comprising a rotary device and at least one of the following connected to the rotary device: a hydraulic pump/motor, an electric generator, and a flywheel, and a bogie arrangement comprising two power conversion modules journaled, wherein the rotary devices preferably are journaled at a right angle to the extension of the elongated means, and comprising a housing resting on ground, wherein the energy storage means is adapted to be displaced below ground level.

According to a fifth aspect of the invention, a method of controlling a power take-off device comprising a buoy and a means for converting linear motion from movements of the buoy into rotary motion, is provided, the method being characterized by applying an essentially constant pre-tension force on the buoy, and simultaneously applying a variable damping force on the buoy, wherein the variable damping force is superimposed on the pre-tension force.

### Brief description of drawings

The invention is now described, by way of example, with reference to the accompanying drawings, in which:
Figures 1a and 1b show a side and a top view, respectively, of a wave energy converter with a power take-off comprising a clutch and flywheel connected to a rack and pinion drive.
Figures 2a and 2b show a side and a top view, respectively, of a wave energy converter with a power take-off comprising two modules with one clutch and flywheel on each side of a pinion, where both modules are connected with a common rack in a back to back arrangement.
Figures 3a and 3b show a side and a top view, respectively, of a power take-off similar to figures 2a and 2b, with power take-off modules comprising a fixed displacement hydraulic pump/motor on one side of the pinion and a clutch and flywheel on the other side of the pinion.
Figures 4a and 4b are views of a power take-off similar to figure 3a and 3b, respectively, with a planetary gearbox added between the pinion and the clutch in the power take-off modules.
Figures 4c and 4d show a similar configuration as figures 4a and 4b but with two fixed displacement pumps in a tandem arrangement in each power take-off module.
Figures 5a and 5b show a similar power take-off module as Figures 4a and 4b but with continuous variable transmissions instead of the gearbox and clutch between the pinion and the flywheel and with variable displacement pump/motor instead of fixed displacement in each power take-off module.
Figure 6 shows an embodiment of the power take-off according to figures 3a and 3b with the addition of hydraulic control valves in a buoy moving along a rack connected to a fixed structure, which exports power in the form of high pressure fluid to a separate power take-off unit with hydraulic motors, gravity storage and electric generators to generate electricity.
Figure 7 shows a top view of a wave energy converter with a power take-off as shown in figure 6 with the addition of hydraulic accumulators, a hydraulic motor and an electric generator to generate electricity on board the buoy.
Figure 8a shows a wave energy converter with a power take-off according to figures 4c and 4d with the addition of control valves and accumulators in the buoy, linear guided rack running through the buoy, encapsulation of the rack in both ends and a dynamic connection from the buoy to an hydraulic collection system on the sea bed comprising flexible hoses for high and low pressure, submerged buoy, pipes and foundation.
Figure 8b shows a wave energy converter with a power take-off according to Figure 8a with the clutch and flywheel in each power take-off module replaced with another fixed displacement tandem pump arrangement.
Figure 9 shows a wave energy converter with a power take-off as shown in figure 8b but with the addition of a hydraulic motor and electric generator on board the buoy and a dynamic/static cable connecting the wave energy converter to an electric collection system on the sea bed.
Figures 10a, 10b and 10c show a rack assembly with integrated guide rails.
Figures 11a, 11b and 11c show a flexible wire suspension system for power take-off modules in boogie arrangements with guide wheels to guide the power take-off modules around a rack assembly according to Figure 10a, 10b and 10c.
Figures 12a, 12b and 12c show a wave energy converter according to Figure 8a with the power take-off modules in a flexible wire suspension system according to Figures 11a, 11b and 11c and a rack assembly according to Figure 10a, 10b and 10c.
Figure 12d shows a wave energy converter according to Figure 12c with a flexible wire suspension also from below the power take-off modules.
Figures 13a and 13b shows a central unit with gravity storage where a counterweight is suspended in a rack assembly according to Figure 10a, 10b and 10c, and with a flexible wire suspension system according to Figures 11a, 11b and 11c with power take-off modules comprising an hydraulic motor, three way planetary gearbox, a pinion and a generator with a disc break.
Figures 14a and 14b show a central unit according to Figures 13a, 13b with power take-off modules comprising a pinion, a two way planetary gearbox and a generator with a disc break.
Figure 15 shows an example graph of pre-tension and damping forces applied on a buoy.
Figure 16 shows an array of wave energy converters with hydraulic collection of power to a central unit according to Figure 13a and 13b.
Figure 17 shows an array of wave energy converters with electric collection of power to a central unit according to Figure 14a and 14b.
Figure 18a shows a central unit with gravity storage according Figure 13a, 13b, or 14a, 14b in a tower fixed to the sea bed.
Figure 18b shows a central unit with gravity storage according Figure 13a, 13b, or 14a, 14b in a floating tower with single point tension mooring.
Figure 18c shows a central unit with gravity storage according Figure 13a, 13b, or 14a, 14b in a shaft or hole in the ground.

### Description of embodiments

In the following, a detailed description of a power take-off and a wave energy converter according to the invention will be given.

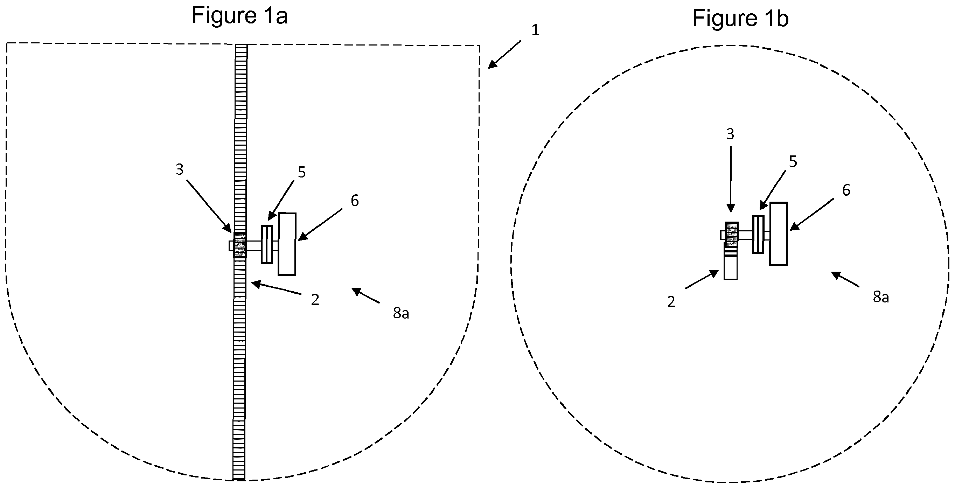

Figures 1a and 1b show a power take-off device for a wave energy converter in the form of a buoy 1 with a power take-off module 8a comprising a flywheel 6 with a shaft attached to an oscillation device comprising an elongated means and a rotary means for converting linear motion from the movements of the buoy 1 into rotary motion. In the shown embodiment, the rotary means is a pinion 3 and the elongated means is a gear rack 2. A clutch 5 is located on the shaft of the flywheel to the pinion 3 and enables the flywheel 6 to be engaged and disengaged to and from the rack and pinion 2, 3.

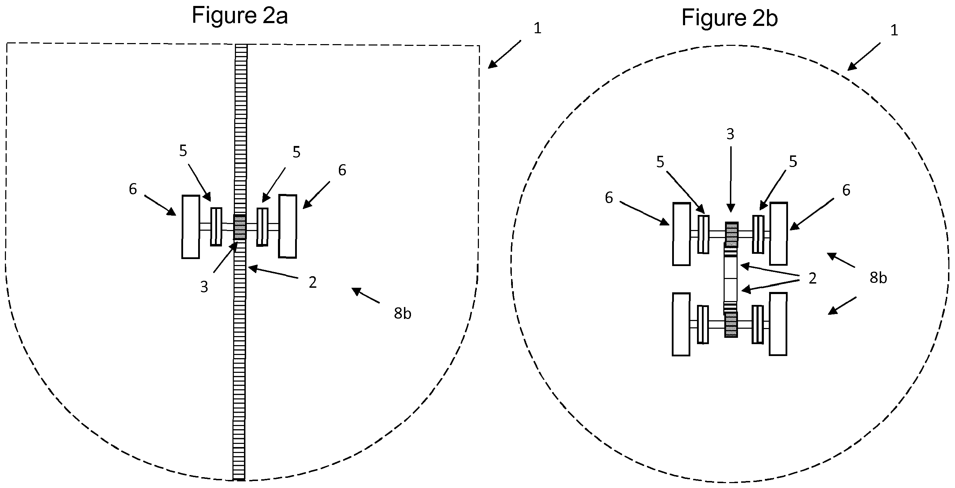

Figures 2a and 2b show a power take-off device for a wave energy converter designed according to the same basic principles as the one described with reference to Figures 1a and 1b but with two power take-off modules 8b, each comprising two sets of flywheels 6 connected on either side of the pinion 3 by means of a respective clutch 5. The pinions are connected to the gear rack 2 in order to convert linear motion from the movements of the buoy 1 into rotary motion. The clutches 5 enable each flywheel 6 to be independently engaged and disengaged to and from the rack and pinion drive. This embodiment with a total of four flywheels that can be connected to a common rack in a back to back arrangement in any combination by means of the clutches.

Using multiple flywheels enables the effective mass of the buoy to be changed in a number of steps within an interval, which makes it possible to tune the buoys resonance frequency to match with the wave frequency, whereby the amplitude and velocity of the buoy motion will be higher and power capture increased. Tuning of the effective mass can also be done in such way that the buoy becomes less resonant with the waves in order to reduce or limit power capture and the amplitude and velocity of the buoy motion, which is useful in large waves and strong sea states to prevent over load and end stops.

The flywheels can be of the same size or different sizes to increase the number of steps within an interval for the effective mass of the buoy. For example, 16 steps can be provided with four flywheels if the sizes of the flywheels are selected according to 1x, 2x, 4x and 8x, where in a preferred embodiment 1x + 8x will be connected to one pinion and 2x + 4x to the other pinion in order to distribute the load more evenly between the pinions.

Typically the clutches will be operated at the turning point where the buoy 1 changes direction, where the speed of the flywheel is zero or close to zero. A control system (not shown in the figures) is adapted to determine the optimal combination of the flywheels for the next stroke of the wave. A simpler control strategy is to optimize the combination of flywheels engaged only depending on the sea state. Flywheels can also be disconnected during the movement of the buoy while the flywheels are spinning. The clutch can further have a torque limiting function that either disengage the clutch completely when reaching a certain torque limit or slide to keep the torque on the torque limit. A disc break, not shown, can be used to stop free spinning flywheels preferably before the next turning point, or the clutch can be engaged again at a later time to slide until the flywheel have the same speed as the input shaft to the clutch again.

An advantage with using flywheels to control the resonance frequency of the buoy is that the force applied from the flywheels depends on the acceleration of the buoy and not the position. Thus, the buoy can travel along the rack to follow large waves as well as tidal variations.

Another advantage with using multiple flywheels connected to a common rack through pinions is that the force required to control the resonance frequency is distributed over multiple gear meshes rather than being focused to one point on the rack.

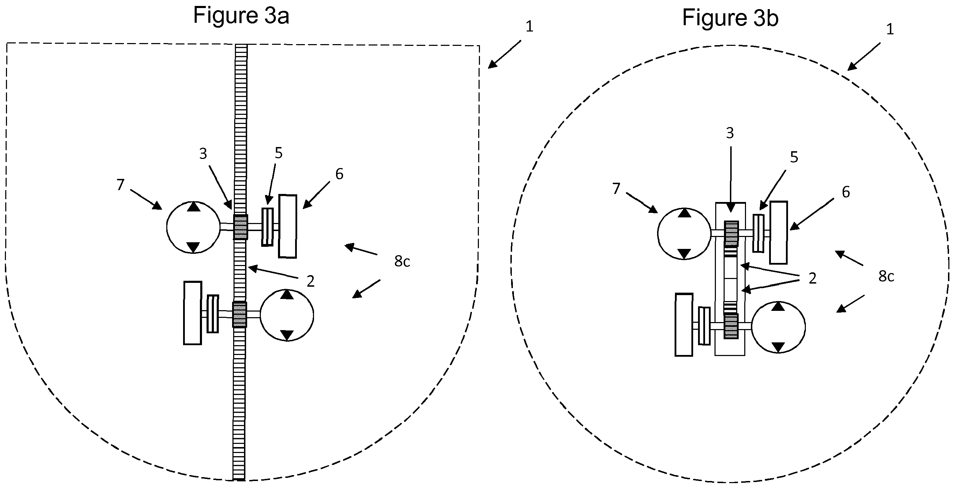

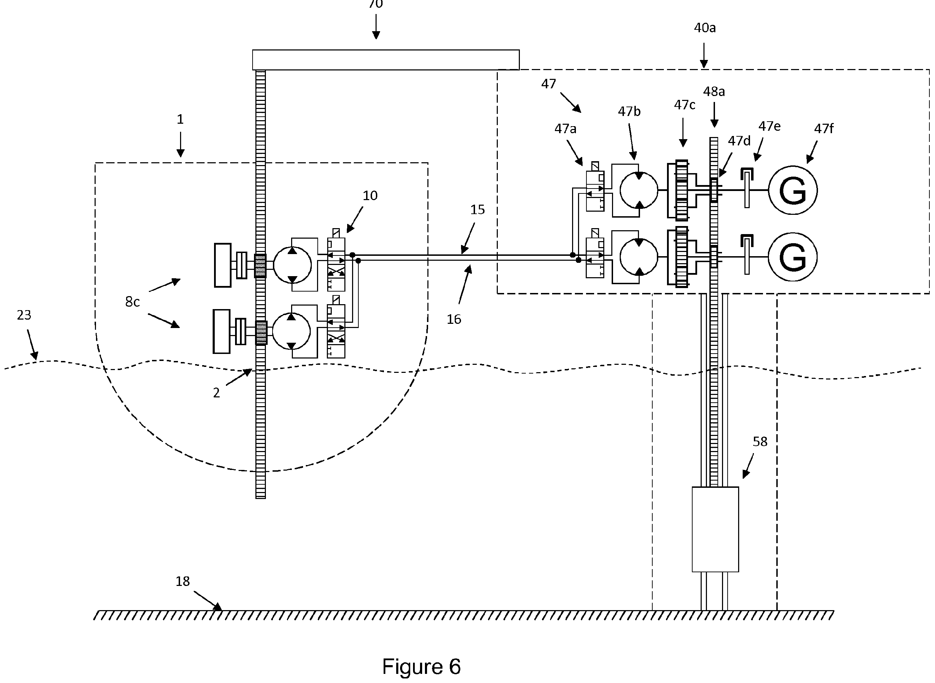

Figures 3a and 3b show a power take-off device for wave energy converters designed according to the same basic principles as the one described above with reference to Figures 2a and 2b but with one of the flywheels 6 and clutches 5 in each set replaced with a fixed displacement hydraulic pump/motor 7 in each power take-off module 8c. A power take-off can comprise one or multiple power take-off modules connected to a common gear rack 2. The resonance frequency is controlled by engaging/disengaging flywheels 6 and the damping / power extraction is controlled by engaging / disengaging pumps/motors 7 and by controlling the direction of force to be applied to the rack in the opposite direction as the movement of the buoy by valves 10, as shown in figure 6, or by means of a graetz valve bridge, not shown. Such valves can be used to create a joint uni-directional high pressure output flow and a uni-directional low pressure return flow to all pumps/motors in the power take-off.

An advantage with this arrangement is that the force component that controls the resonance of the buoy is separated from the pumps/motors and is instead provided by means of the flywheels, which provide a more optimal force profile without the need to change displacement of the pumps/motors while the buoy is moving.

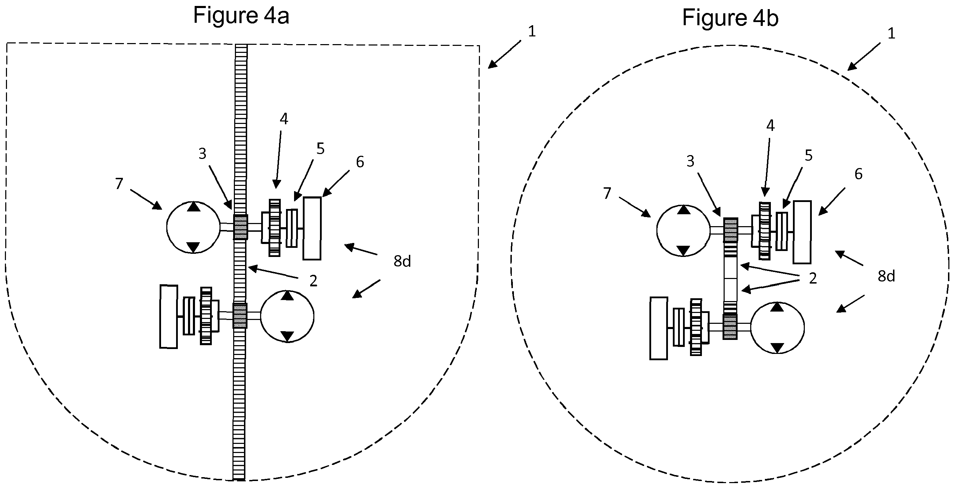

Figures 4a and 4b show a similar configuration as Figures 3a and 3b with the only difference that planetary gearboxes 4 are added to the power take-off modules 8d to increase the speed of each flywheel 6 and thereby reduce the weight required for each flywheel 6 for a given inertia force to the rack 2.

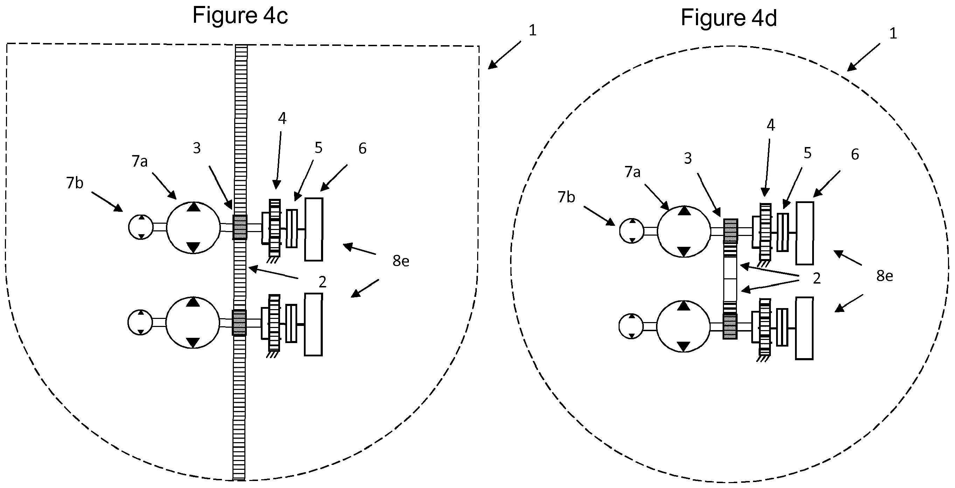

Figures 4c and 4d show a similar configuration as figures 3a and 3b but with two fixed displacement pumps/motors 7a, 7b in tandem on the same shaft to the pinion 3, to enable multiple displacements to be applied from each power take-off module 8e, which increases the total number of force levels that can be used in the power take-off.

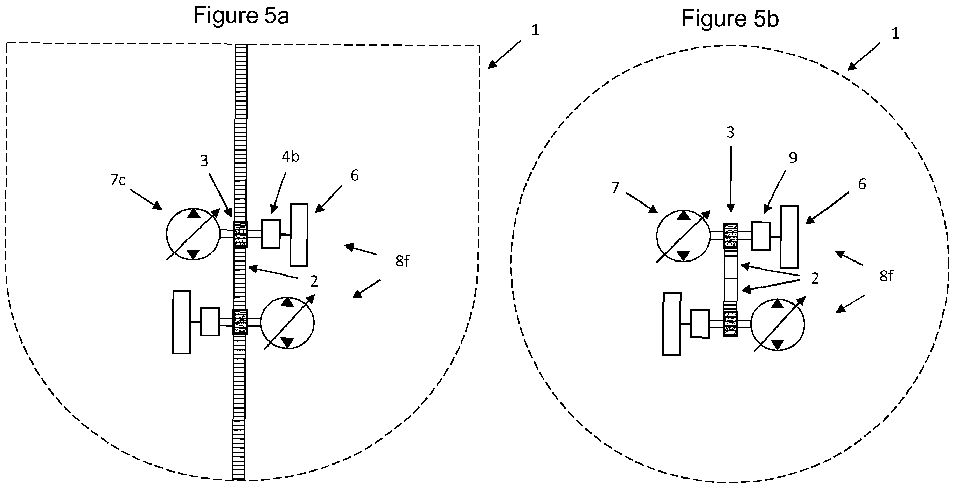

Figure 5a and 5b show a similar power take-off module 8f as Figures 4a and 4b but with continuous variable transmissions (CVT) 4b instead of gearboxes 4 and mechanical clutches 5 that can be used to change the gear ratio to the flywheels 6 and thereby the inertia force applied to the rack 2 in order to tune the effective mass without using clutches. This configuration also exhibits a variable displacement pump/motor 7c instead of a fixed displacement pump/motor in each power take-off module which can be used for continuous variation amplitude and direction of the damping force without using control valves.

Figure 6 shows an embodiment of a wave energy converter with a point absorbing buoy 1 with power take-off modules 8c similar to the one shown in Figures 3a, 3b. In this embodiment, control valves 10 are also provided between the hydraulic pumps/motors 7 and high and low pressure hoses 15, 16. The rack 2 is connected to a central unit in the form of a fixed central tower 40a by means of a beam 70, whereby the central unit is adapted to provide a fixed point of reference for the buoy 1 to move against in order to apply bi-directional feed force to the rack from pumps/motors and flywheels in the power take-off modules 8c. The control valves 10 are used to control the direction of the feed force applied to the rack from the pumps/motors 7, i.e. which port of the hydraulic pump/motor will be connected to high and low pressure circuits to which the high and low pressure hoses 15, 16, respectively, are connected. When applying a damping force to the buoy, the position of the control valve 10 is changed depending on the direction of the buoy in such a way that the force applied to the rack counteracts the buoy motion, whereby fluid is pumped to the high pressure circuit and exported from the wave energy converter in both direction of the buoy motion. Instead of active control valves, a Graetz bridge, not shown, can be used to provide the damping function, although such valve bridge is not capable of providing reactive power to the buoy if this is required. However, the reactive force component used for changing the resonance frequency of the buoy is provided through the flywheels which has the advantage that the pumps/motors 7 only have to be sized for the damping force.

In the shown configuration, the high and low pressure hoses 15, 16 are connected to hydraulic motors 47b in power take-off modules 47 adapted to lift and lower a counterweight 49 in the gravity storage in the central unit 40a in the form of a tower by means of a planetary gearbox 47c with the ring gear shaft connected to the hydraulic motor 47b and the carrier shaft connected to pinion 47d. The counterweight gravity storage provides the hydraulic circuits with constant pressure which is necessary to maintain constant force levels from the pumps/motors in the wave energy converter. Preferably, multiple wave energy converters are connected to a single central unit 40a with gravity storage. The hydraulic motors 47b in the power take-off of the central unit can furthermore be used also as pumps to extract stored energy from the gravity storage device to supply the pumps/motors 7 in the buoy 1 with power when the control valve 10 is set to a position that provides reactive force to the rack 2. The generators 47f are furthermore connected to the sun gear shaft of the planetary gearbox 47c and the speed of the generator can be controlled by power electronics, not shown, to output energy to the electrical grid on a desired level independently from the hydraulic input of power to the gravity storage, in order to better meet the demand of power from the electric grid. The electric generator can furthermore be used as motors to store electric energy from the grid in the gravity storage, whereby the gravity storage functions as a means to provide flexible power production as well as grid storage.

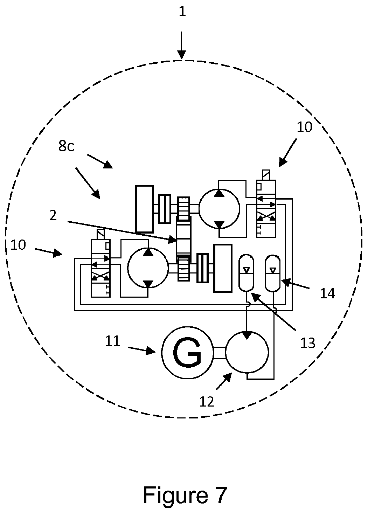

Figure 7 shows a configuration of the power take-off in a wave energy converter similar to the one shown in Figure 6, but with hydraulic accumulators 13, 14, a hydraulic motor 12 and a generator 11 on board the wave energy converter to generate electricity on board the buoy.

Reactive power to control the resonance frequency of the buoy can be provided from stored energy in the hydraulic accumulators by setting the control valves 10 in a position that applies the force to the rack 2 in the same direction as the movement of the buoy 1. The hydraulic accumulators 13, 14 preferably use a high pre-charge pressure and large gas volume in relation to the working fluid volume in order to provide a higher minimum force from the pumps/motors 7 when the working fluid volume in the high pressure accumulator 13 is low.

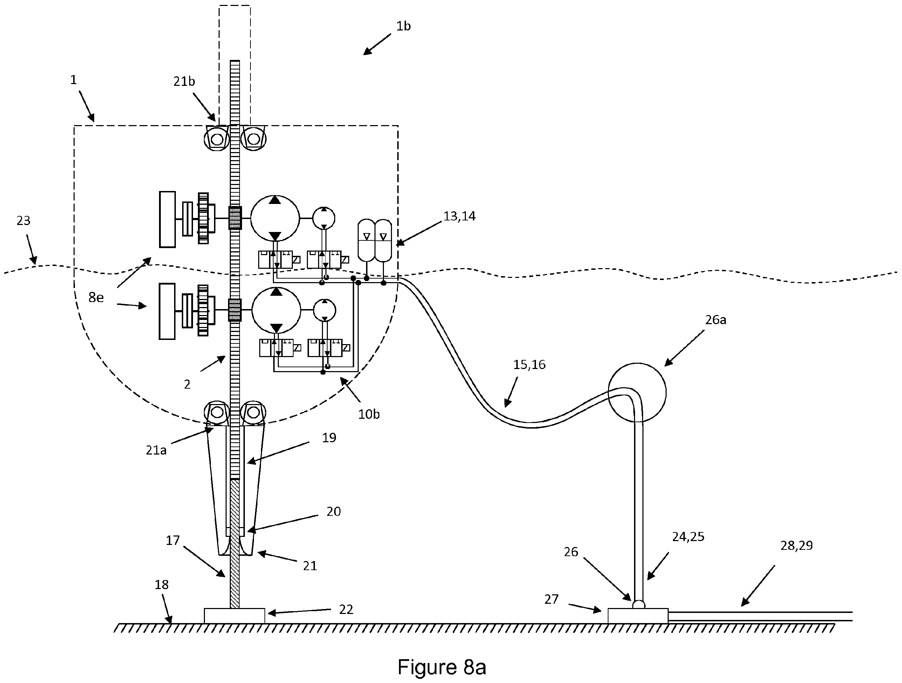

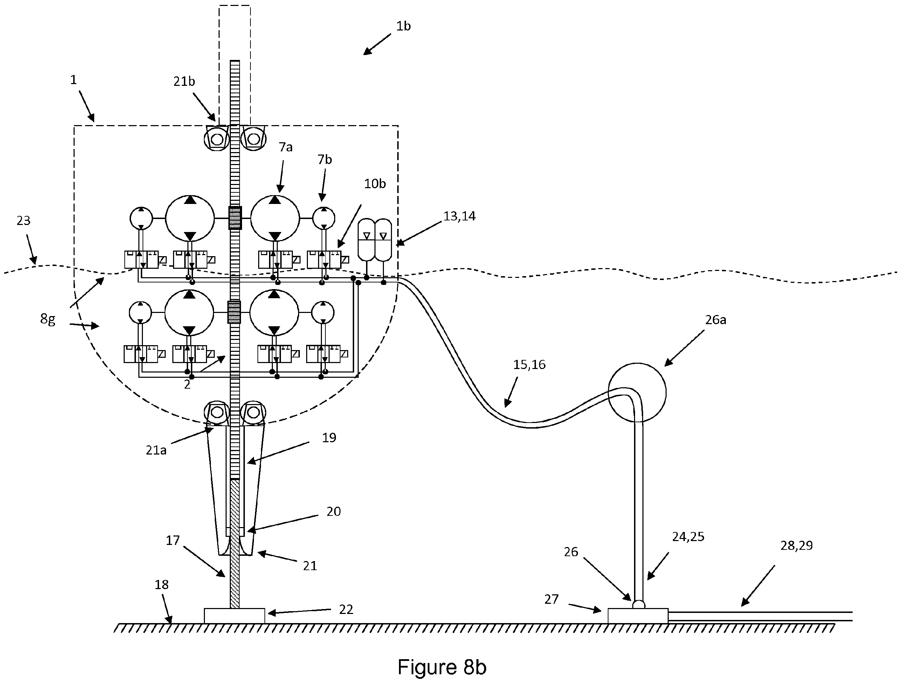

Figure 8a and 8b show different versions of an embodiment of a wave energy converter with a power take-off according to figures 4c and 4d, where the power take-off in Figure 8a comprises flywheels and the power take-off in Figure 8b comprises only the pumps/motors. Control valves 10b and high and low pressure hydraulic accumulators 13, 14 are added on board the buoy 1. This embodiment further shows a rack 2 with guide wheels 21a at the bottom of the buoy and 21b at the top of the buoy, where the buoy moves along the rack which is fixed to the sea bed 18 through mooring rope 17 guided by the rope guide 21 to prevent radial loads on the linear seal 20 to keep sea water from leaking into the rack encapsulation cylinder 16.

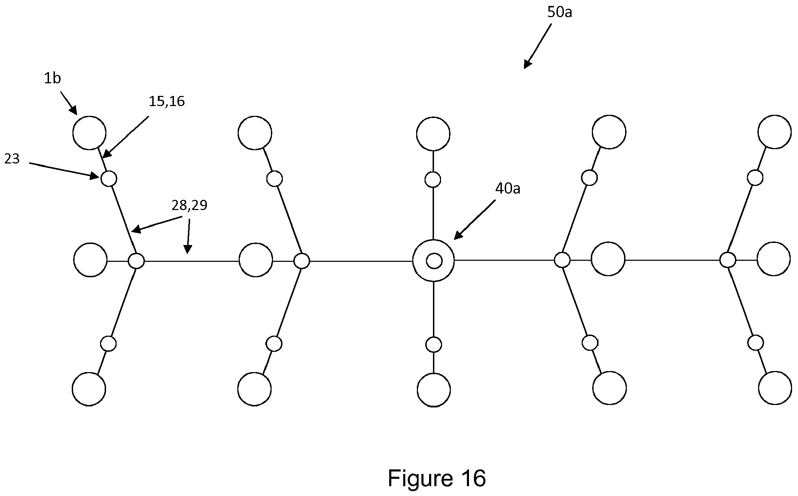

The power take-off in the buoy 1 is further connected to high and low pressure pipes 28, 29 on the sea bed 18 through a dynamic arrangement with hoses 15, 16 connected to a lifting device in the form of a tension buoy 26a, which leads down to a knee-junction 26 at the foundation 27 through high and low pressure vertical pipes 24, 25, to allow movements of the buoy 1. Pipes 28 and 29 connect the wave energy converter to a hydraulic collection system for an array of wave energy converters, as shown by Figure 16.

The power take-off comprises a number of larger hydraulic pumps/motors 7a, in this embodiment four larger pumps/motors, and a number of smaller hydraulic pumps/motors 7b, in this embodiment four smaller pumps/motors. The larger pumps/motors 7a are used mainly to apply a pre-tension force to pull the buoy 1 down to the desired level in relation to the water surface 23, in the downward movement of the buoy the pumps/motors are driven as motors by means of stored energy from the hydraulic accumulators or from the central tower or by means of hydraulic power from other wave energy converters in an array of wave energy converters connected to the same hydraulic collection system, while the smaller pumps/motors 7b are used mainly to apply a tunable damping force to the buoy and thereby to control the power capture with greater detail.

The control valves 10b are used to connect and disconnect the hydraulic pumps/motors 7a, 7b from the hydraulic circuit in order to enable or disable them to provide a feed force to the rack, resulting in a discrete force control scheme. For example, in an embodiment with eight power take-off modules, the large pumps/motors 7a are preferably selected to provide four times higher feed force to the rack, e.g. by having four times larger displacement, compared to the small pumps/motors 7a whereby eight large pump/motors 7a can be connected together with 1-8 small pump/motors 7b in the up-stroke while six large pumps/motors 7a together with 1-8 small pump/motors 7b are connected in the down stroke, thus providing eight force levels above and below the pre-tension force. It should be realized that the six large hydraulic pump/motor units 7a that are always engaged in this described embodiment can be connected to a separate hydraulic circuit with separate hydraulic accumulators, not shown, to provide the pre-tension spring force in a way that reduces the exchange of high and low pressure fluid to the hydraulic collection system.

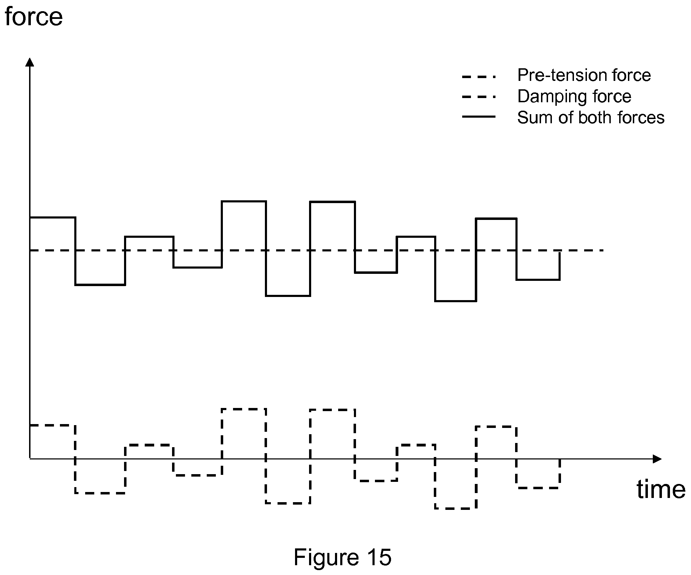

The combination of the pre-tension force and the damping force is shown in Figure 15. It is there seen that the pre-tension force is an essentially constant force pulling the buoy 1 down towards the sea surface while the smaller damping force alters in direction to work against the movement of the buoy to dampen it with different amplitudes to optimize the power capture depending on the wave size. The solid line shows the combination of these forces which remains in the same force direction towards the sea floor 18 with an offset which alternates between applying a higher and a lower force in relation to the pre-tension force. The combination of pre-tension and damping force thereby replaces the need for a graetz bridge or active port crossing valves to rectify the export and return flows of fluid to the pumps/motors and also increases the load capacity of the rack and pinion drive since the combined force applied to the rack remains always in the same direction towards the sea bed.

The pre-tension force and the damping force levels available to the system can be extended or reduced by adding or removing power take-off modules. The pumps/motors 7a, 7b can be used with different proportions in relation to each other and controlled in different ways to provide other combinations of pre-tension force and damping force levels above and below the pre-tension force.

The described power take-off and control with a pre-tension force applied from the pumps/motors enables bi-directional power capture for e.g. a point absorbing buoy with a tension mooring. The described power take-off can also be used for other types of buoys such as the buoy described by Figure 6. Flywheels 6 are optionally used in the power take-off modules to control the resonance frequency of the buoy instead of providing this function by means of only the pumps/motors and control valves, as shown in Figure 8b.

In the embodiment shown in Figure 8a, the combination of all three force components remains in a direction that pulls the buoy towards the sea bed through the complete wave cycle, whereby the mooring rope is always kept tensed. All three force components are applied through the rotary means of the oscillation device.

A constant pre-tension force furthermore balances the buoy against the current sea level, i.e. makes the buoy follow waves as well as tidal variations without then need for additional devices to change the position of the elongated means.

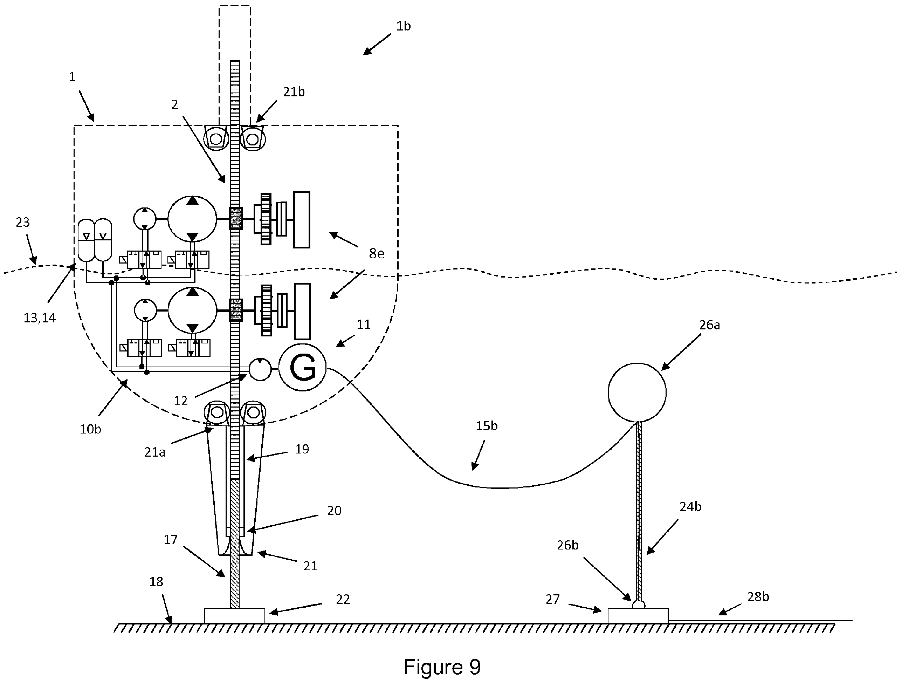

Figure 9 shows a wave energy converter with a power take-off according to Figure 8b with the addition of hydraulic motor 12 and electric generator 11 to generate electric power on board the buoy and with electric dynamic cable 15b connected to the tension buoy 23 and electric power cable and mooring rope 24b connecting the tension buoy to foundation 27 through shackle 26b to allow angular movements and with the power cable further connected to the electrical cables 28b.

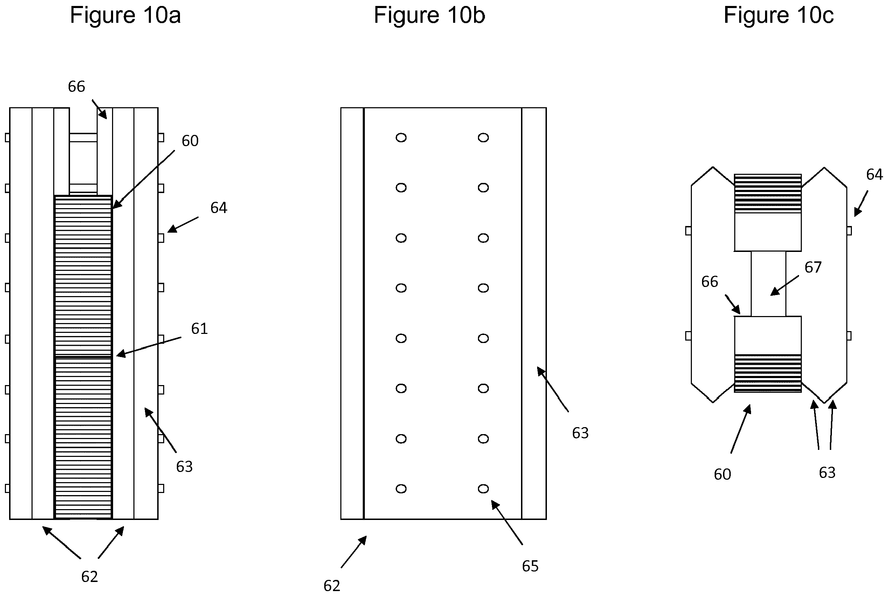

Figures 10a, 10b, and 10c show a detailed view of an embodiment of a gear rack assembly for use in a buoy and for use in a gravity storage device, with multiple rack elements 60 mounted between two side plates 62 with integrated guide rails. The rack elements are mounted back to back on back supports 66 in the side plates 62 and with air space 67 created between them to increase the distance between each rack. Mounting pins 64 are used to mount standard rack elements whereby only the side plates 62 with back supports 66 and integrated guide surfaces 63 have to be custom made. The rack elements can be mounted in the rack assembly also in other ways.

This embodiment enables a modular and extendable rack assembly with standard rack elements in a back to back arrangement by displacing the joint between two sections of side plates with the joint between two rack elements, and also provides a center space to increase the shaft cc distance between the drive train modules and to increase the stiffness of the rack assembly.

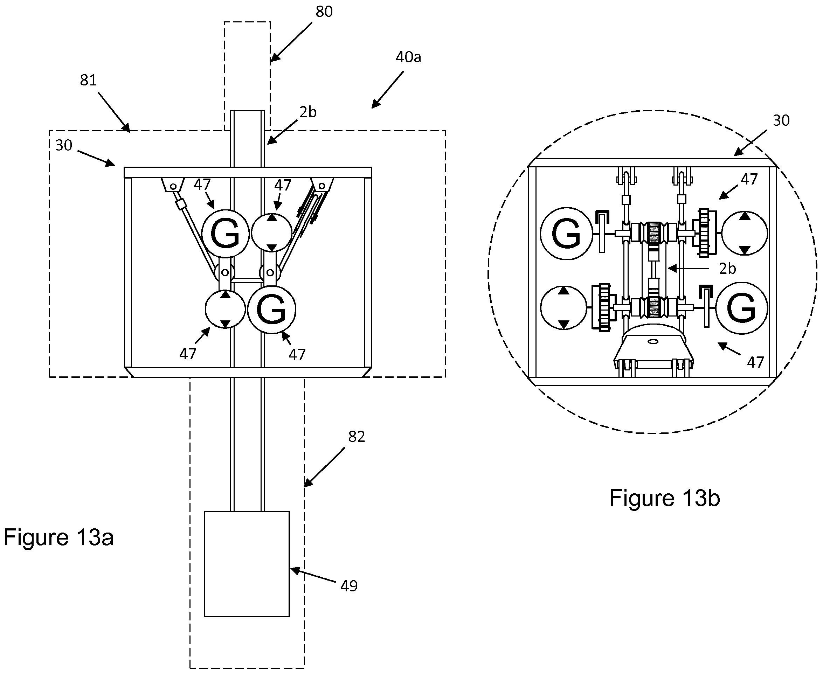

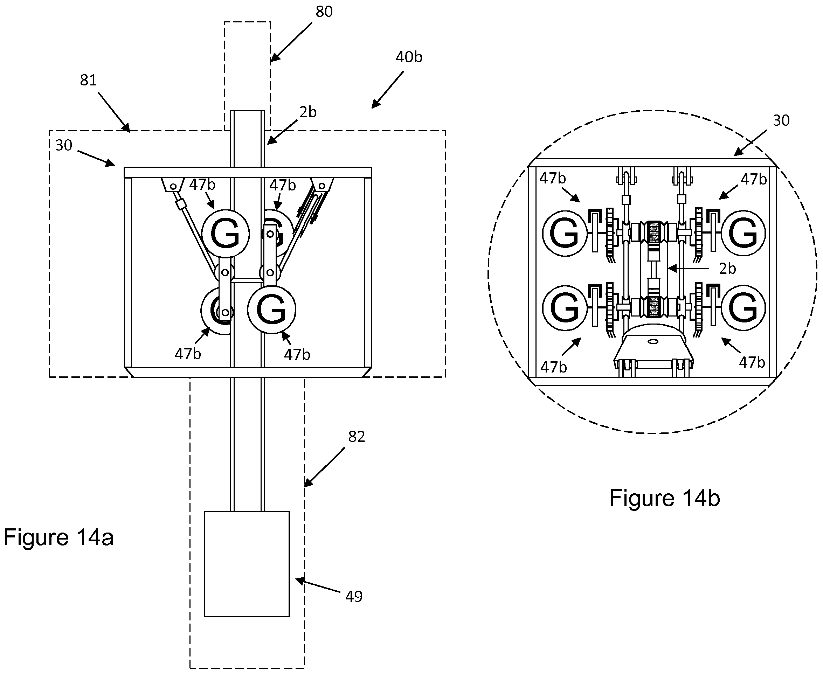

When the rack assembly 2b is used in the gravity storage device, see Figures 13a, 13b, 14a and 14b, the hollow space 67 can be filled with ballast to reduce the volume of the counterweight 49 to provide a given mass for storing potential energy. The rack is lifted with the counterweight and comprises a part of the mass used in the storage.

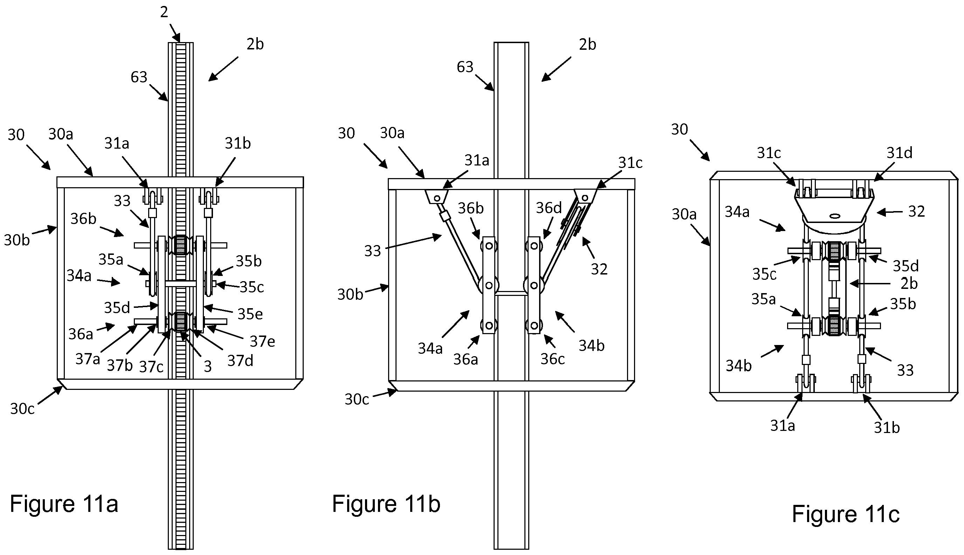

Figures 11a, 11b and 11c show a power take-off suspension module 30 with four power take-off modules 36a, 36b, 36c and 36d comprising shaft 37a and guide wheels 37c and 37d on each side of pinion 3, whereby power take-off modules 36a and 36b are journaled in bogie-frames 34a and power take-off modules 36c and 36d are journaled in bogie-frame 34b, which are suspended around rack assembly 2b in a wire 33. The bogie-frames 34a and 34b are surrounded by a support structure 30a, 30b and 30c fixed with the buoy 1, comprising a rectangular or square structure, both when seen from the side, as in Figure 11a and 11b, and from the above, as in Figure 11c, made of steel bars, for example. However, the configuration of the support structure is not limited to this exact configuration. Two shackles 31a, 31b are suspended from a top bar 30a of the power take-off suspension module 30. The wire 33 runs from the first shackle 31a, essentially vertically down around a first bogie sheave 35a in bogie-frame 34a, then essentially horizontally across to the other side of the rack assembly 2b, to and around a third bogie sheave 35c in bogie-frame 34b, then essentially vertically up and around a support structure sheave 36 suspended by shackles 31c and 31d in support structure 30a, then back again down around fourth and first bogie sheaves 35d and 35a in the bogie frames and finally up to the second shackle 31b, which is spaced apart from the first shackle 31a, and forms a wire cradle between two sides of the support structure 30a and around the rack assembly 2b.

The guide wheels 37c and 37d in each power take-off module 36a and 36b are locked in position in relation to each other by the bogie-frames 34a and 34b, and runs on the guide rails 63 of rack assembly 2b. The guide wheels in each power take-off module are furthermore being pressed towards the guide rails in the rack assembly by the power take-off suspension system, with a force proportional to the angle of the wire and the feed force applied to the rack to always keep the pinions aligned with the rack without over determining the system while allowing the bogie-frames to pivot around a point which can move in the horizontal plane while being fixed in the vertical plane.

Using a single wire with both ends attached on one side of the rack with the middle of the wire running over a sheave on the other side of the rack enables the four sheaves in the bogie frames to move vertically in relationship to each other while keeping the vertical position of the rack steady, i.e. allows the frames to tilt with the rack.

The assembly can be extended with additional power take-off suspension modules 30 to increase the feed force to the rack, increase the number of pinions distributing the feed force and the number of force levels and flywheel inertias available to control the damping force and effective mass of the buoy. When used in the gravity storage device, very large weights can be carried by placing multiple power take-off suspension modules 30 on top of each other around a common rack assembly 2b.

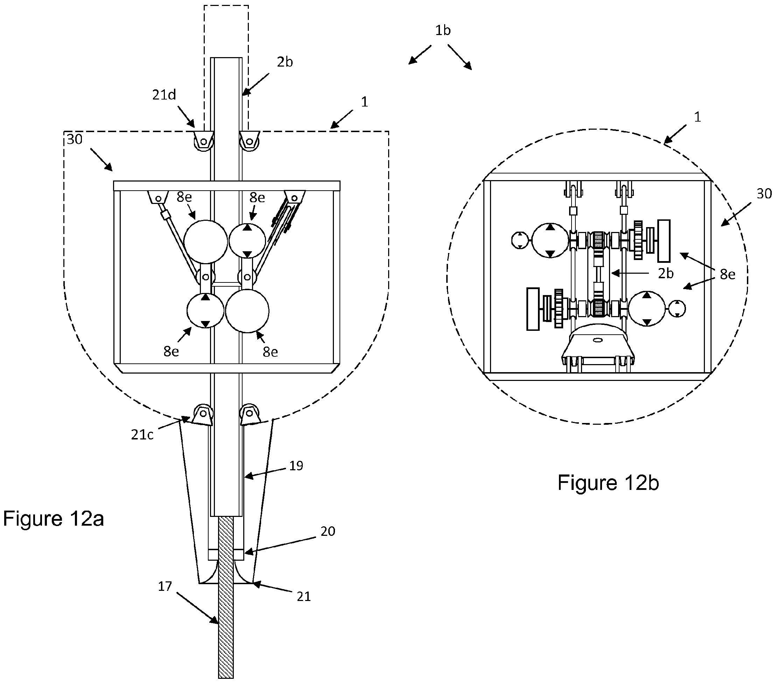

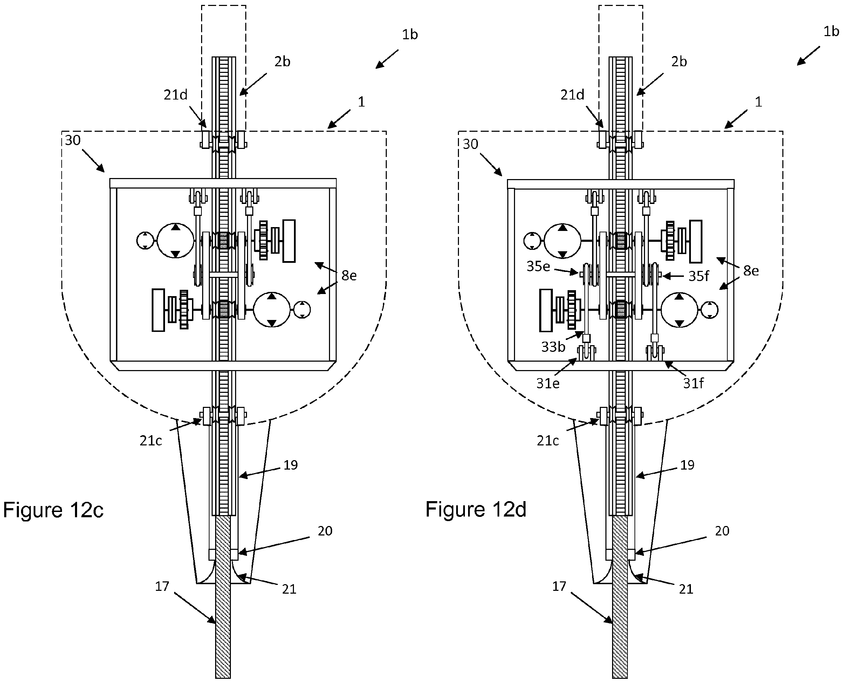

Figures 12a, 12b and 12c show a similar embodiment as Figure 8a but with four power take-off modules 8e corresponding to power take-off modules 36a, 36b, 36c and 36 in a power take-off suspension module 30 according to Figures 11a, 11b and 11c. Rack 2b is provided with integrated guide rails according to Figures 10a, 10b and 10c.

Figure 12d shows a similar embodiment as Figure 12c with an additional wire 32b holding the bogie-frames 34a and 34b also from below through shackles 31e and 31f suspended from one side of support structure 30c and through a second sheave, not shown but similar to sheave 32, on the other side of support structure 30c. It should be realized that the combined power take-off forces may not be sufficient to hold the power take-off modules from moving upward in the vertical plane at all times, why this additional wire suspension from below the power take-off modules may be necessary to secure the power take-off from moving upward relative to the buoy.

Figures 13a and 13b show a central unit 40a according to Figure 6 with an energy storage means in the form of a counterweight 49 suspended by rack assembly 2b in a tower 82, and with four drive train modules 47 corresponding to power take-off modules 36a, 36b, 36c and 36 in a power take-off suspension module 30 according to Figures 11a, 11b and 11c.

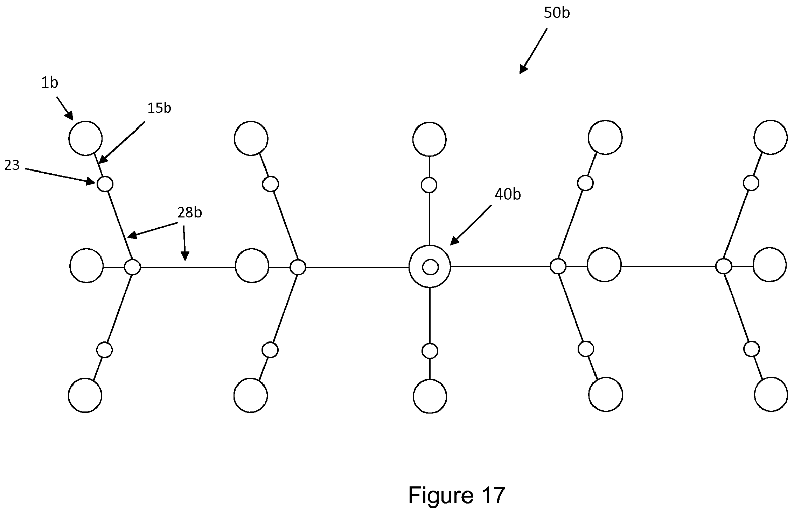

Figures 14a and 14b show a similar embodiment as Figures 13a and 13b, but with the central unit 40b where the drive train modules 47b are provided without the hydraulic motor and a two way gearbox, and thereby only capable of storing electric energy from an electrical grid by running the generators as motors to lift the counterweight 49 and retrieve electric power by letting the counterweight drop and drive the generators to produce electric power. This embodiment can be used as a standalone grid storage facility or in a WEC array with electric collection of power such as the WEC shown in figures WEC shown in figures 9 and 17.

Figure 16 shows an array 50a of wave energy converters 1b and how the wave energy converters 1b are connected through flexible high and low pressure hoses 15, 16 to a tension buoy 23, preferably with vertical pipes leading down to a junction at the sea bed connecting to horizontal piping 28, 29 to which all wave energy converters are connected to collect the hydraulic fluid to a central unit in the form of a central collection tower 40a. Any number of wave energy converters in different patterns can be used in an array based on the same principle.

Figure 17 shows an array 50b of wave energy converters 1 b similar to Figure 16 but with electrical collection of power to central unit 40b, i.e., the central collection tower 40b through dynamic electric power cable 15b. This embodiment has the advantage of a cost effective and robust electrical storage and smoothing for the wave energy converter array which reduces the cost of the land cable and adds value from grid storage services to the grid.

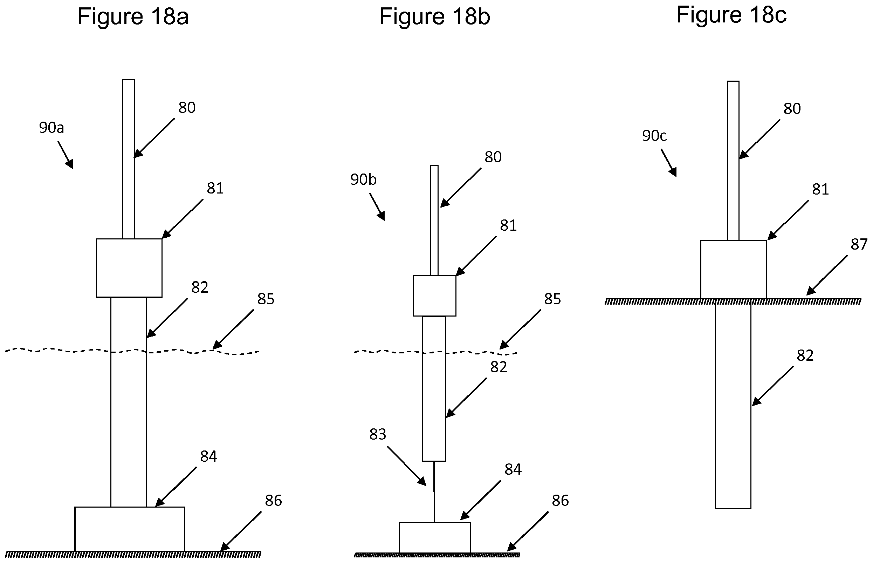

Figure 18a shows the exterior of a central unit 40a or 40b according to Figures 13a, 13b or 14a, 14b in the form of a tower fixed to the sea bed comprising rack encapsulation 80, machinery housing 81, tube 82 for the counterweight and foundation 84 standing on the sea bed 86 with the water surface 85 below the machinery housing.

Figure 18b shows the exterior of an alternative embodiment of a central unit 40a or 40b according to Figures 13a, 13b or 14a, 14b in the form of a floating tower comprising rack encapsulation 80, machinery housing 81, tube 82 for the counterweight, tensed mooring rope 83 and foundation 84 on the sea bed 86 with the water surface 85 below the machinery housing, whereby the mooring rope is tensed by the buoyancy of the floating tower in order to keep the tower in a fixed vertical positon. It should be realized that any anchorage such a technical anchor can be used for the tension mooring rope.

Figure 18c shows the exterior of a central unit 40a or 40b according to Figures 13a, 13b or 14a, 14b in the form of a rack encapsulation 80, machinery housing 81 on the ground level 87, and tube 82 for the counterweight in a shaft or hole in the ground.

It will be realized that when stating that an object is "connected to" another object, this can be either directly or indirectly, through for example a gear arrangement.

Preferred embodiments of a power take-off device and system for wave energy conversion have been described. It will be realized that this can be varied without departing from the inventive idea as defined in the appended claims.

## Claims

1. A power take-off device comprising a buoy (1) and a means (2, 3) for converting linear motion from movements of the buoy (1) into rotary motion comprising an elongated means (2) and rotary devices (3) interacting with the elongated means, **characterized by**
means (7a) for applying an essentially constant pre-tension force on the buoy (1), connected to a rotary device (3), and
means (7b) for applying a variable damping force on the buoy (1), connected to a rotary device (3), wherein the variable damping force is superimposed on the pre-tension force,
whereby, during operation, a uni-directional torque is applied on the rotary devices (3) by the combination of the means (7a) for applying an essentially constant pre-tension force on the buoy (1) and the means (7b) for applying a variable damping force on the buoy (1).

2. The power take-off device according to claim 1, wherein the means (7a) for applying an essentially constant pre-tension force on the buoy (1) are substantially larger, preferably 3-6 times larger than the means (7b) for applying a variable damping force on the buoy (1).

3. The power take-off device according to any one of claims 1-2, wherein the uni-directional torque applied on the rotary devices (3) is in a direction that pulls the buoy downward.

4. The power take-off device according to any one of claims 1-3, comprising a flywheel (6) connected to a rotary device of said rotary devices (3), and preferably comprising a transmission means (5; 9) adapted to engage and disengage the flywheel to and from the rotary device (3).

5. The power take-off device according to claim 4, wherein the transmission means comprises any of the following: a clutch (5) and a continuous variable transmission (9).

6. The power take-off device according to any one of claims 4-5, comprising a plurality of flywheels, preferably at least one flywheel arrangement comprising two flywheels (6), each flywheel being connected to a common rotary device (3) by means of a respective transmission means (5).

7. The power take-off device according to any one of claims 4-6, comprising at least one flywheel arrangement comprising one flywheel (6) connected to a rotary device (3) by means of a transmission means (5), the flywheel arrangement further comprising a fixed displacement hydraulic pump (7) connected to the rotary device (3).

8. The power take-off device according to any one of claims 4-7, comprising at least one flywheel arrangement comprising one flywheel (6) connected to a rotary device (3) by means of a transmission means (5), the flywheel arrangement further comprising a variable displacement hydraulic pump connected to the rotary device (3).

9. The power take-off device according to any one of claims 4-8, wherein at least one flywheel arrangement comprises a planetary gearbox (4) adapted to increase the speed of the flywheel (6).

10. The power take-off device according to any one of claims 1-9, comprising an electric generator (11) connected to a rotary device of said rotary devices (3).

11. An array of wave energy converters comprising a plurality of power take-off devices according to any one of claims 1-10 interconnected by hydraulic hoses (15, 16) or electrical wires (15b) and preferably comprising a central unit (40a; 40b), preferably comprising a gravity storage device, connected to the plurality of power take-off devices and comprising means for storing energy.

12. An array of wave energy converters comprising a plurality of power take-off devices according to any one of claims 1-10, **characterized by**
a plurality of lifting devices (26a), each lifting device being associated with a power take-off device of the plurality of power take-off devices (8e) in a wave energy converter (1b) and adapted to suspend said hydraulic hoses (15, 16), preferably to respective vertical pipes (24,25) and knee-junction (26) provided on the sea bed (18) or
in that each wave energy converter (1b) is electrically interconnected by means of a dynamic electric cable (15b) to a lifting device (26a), and a static electric cable (24b) held essentially straight in a vertical direction by a lifting device (26a), and with the bottom end of the static electric cable (24b) being connected to a horizontal static electric cable (28b) on the seabed, preferably through a foundation (27) and a shackle (26b), whereby the horizontal static electric cables (28b) from each wave energy converter is conveyed to a central unit (40b).

13. A power conversion device comprising a means (2, 3) for converting linear motion into rotary motion comprising an elongated means (2) and rotary devices (3) interacting with the elongated means, **characterized by**
a plurality of power conversion modules (36a, 36b), each power conversion module comprising a rotary device (3) and at least one of the following connected to the rotary device: a hydraulic pump/motor (7; 7a; 7b; 47b), an electric generator (47f), and a flywheel (6), and a bogie arrangement (34a) comprising two power conversion modules journaled, wherein the rotary devices preferably are journaled at a right angle to the extension of the elongated means.

14. A central unit for connection to an array of wave energy converters, comprising an energy storage means (49), preferably a gravity storage means, wherein the central unit is any of the following:
a power conversion device according to claim 13, comprising a housing standing on a sea bed,
a power conversion device according to claim 13, comprising a housing connected to a foundation (84) standing on a sea bed through a mooring rope (83), which is kept in tension by a submerged part of the housing providing a lift force higher than the gravity force on the central unit, and
a power conversion device according to claim 13, comprising a housing resting on ground, wherein the energy storage means is adapted to be displaced below ground level.

15. A method of controlling a power take-off device comprising a buoy (1) and a means (2, 3) for converting linear motion from movements of the buoy (1) into rotary motion, the method being **characterized by**
applying an essentially constant pre-tension force on the buoy (1), and simultaneously
applying a variable damping force on the buoy (1), wherein the variable damping force is superimposed on the pre-tension force.
